# EUROPEAN PATENT SPECIFICATION

(11) **EP 2 161 067 B1**
(45) Date of publication and mention of the grant of the patent: **03.09.2014**
(21) Application number: 09166184.3
(22) Date of filing: 23.07.2009
(51) Int. Cl.: B01D 39/20, B01J 20/20, C02F 1/28

(54) **Particulate filter**
Partikelfilter
Filtre à particules

(30) Priority: 22.08.2008 IN MU17722008
(43) Date of publication of application: 10.03.2010
(73) Proprietor: Unilever N.V., 3013 AL Rotterdam (NL); Unilever PLC, London EC4Y 0DY (GB)
(72) Inventor: Chatterjee, Jaideep, 560 066 Bangalore, Whitefield (IN); Gupta, Santosh, K, 560 066 Bangalore, Whitefield (IN)
(74) Representative: Rosen Jacobson, Frans Lucas M.

(56) References cited:
- EP-A1- 1 247 572
- EP-A1- 1 870 150
- WO-A1-98/08588
- WO-A1-2005/094966
- WO-A1-2007/039019
- GB-A- 2 390 987

## Description

### FIELD OF INVENTION

The present invention relates to a process for preparing a hemispherical or torispherical particulate-filter block for filtering particulate contaminants including microorganisms like cysts, bacteria and viruses while at the same time providing for relatively high flow rates over long period of time. The invention also comprises a hemispherical or torispherical particulate filter block obtainable by said process. The filter block of the invention is especially useful for incorporation in a water filter for filtration of water under gravity which removes the above contaminants in addition to chemical contaminants.

### BACKGROUND AND PRIOR ART

Water is one of the necessities of human life. Water is important for drinking, cooking food and for preparing beverages. Water is also very important for cleaning items used in the household like clothes, utensils, and other surfaces in the homes e.g the floors and table tops. Further, a large amount of water Is used for personal cleaning in the bathrooms and tollets. The quality of water required for each of the above is different. The best quality is required for human consumption. This water has to be substantially free of harmful microorganisms and other contaminants like dust, organic and inorganic impurities and excessive dissolved salts, to ensure a healthy life for the consumers of such water.

Modern day urban households receive water from large lakes through a network of pipes, while in some rural areas villagers fetch water directly from sources like wells, lakes, rivers and borewells. Water directly taken from such surface and underground sources are generally more impure as compared to piped water which has been treated by the municipality. However, municipal treated water also sometimes get contaminated due to leakage in the supply lines. As a result, most people feel hesitant about drinking water provided by the city water system, without some form of filtration or purification in their homes just prior to consumption. At present, boiling water is believed to the best way of purification. However, boiling is expensive and requires use of fuels like coal, gas, wood or electricity. These fuels are increasingly becoming scarce.

There are other ways in which water is filtered e.g. by filtration through cloth/sieves and by using conventional water filters, also known as candle filters having a filter element. These methods are targeted towards removal of suspended particulate contaminants. On the other hand, various chemical methods of purification of water are known that include chlorination and resin treatment, especially by iodinated ion-exchange resins. Other methods are use of devices having UV lamps and more recently use of membrane filters. These methods aid in the removal and elimination or killing of microorganisms present in water.

Of the above methods, filtration is a very convenient method since it is relatively inexpensive and does not require continuous supply of electricity. However, filters have the problem in that either that are not able to remove all the impurities in water or choke rather fast and need to be replaced. Hence there has been a continuous effort in improving the quality and type of filter which can remove more and more of impurities, yet last till the desired quantity of water is filtered. Some of the more efficient filters are filter blocks where particulate matter is moulded into blocks using binders. Examples of commonly used particulate matter are sand, clay, activated carbon, diatomaceous earth or ceramics. Examples of common binders are polymers, inorganic binders like white cement and resins. Carbon based filter elements are the most efficient for water purification.

The methods and devices typically used in households for filtration of water can be classified based on whether water is available under pressure like the high head of water from an overhead tank or whether water is available in small quantities like a few litres in which case the pressure head available is close to gravity.

Filtration of water in the former case is categorized under online systems which have advantage of the pressure of the water flow to drive the filtration and therefore do not usually face problems of achieving desired flow rate while catering to the basic need of effective filtration.

The latter is classified under self contained systems, which process water in batches under low gravity heads. It is a challenge to ensure the necessary removal of the undesirable contaminants by filtration under such low gravity head, while ensuring high flow rate. Thus, when filters designed for online systems are applied to gravity fed systems they have failed to produce the desired flow rates consistently over time and often choke after a few litres are passed through, leading to the need for replacement or cleaning.

It has thus been a real challenge to provide effective filters for self contained systems which operate under near-gravity head which would on one hand provide for the desired flow rate and at the same time cater to the much required removal of particulate contaminants including biological contaminants such as protozoan cysts like *Cryptosporidium* and even smaller organisms like bacteria and viruses in addition to dissolved chemicals like chlorine, organics and pesticide residues, consistently over long periods of time.

One way to achieve this is through use of the so-called gradient filter where an outer layer has larger particle size/porosity for trapping bigger particles and an inner layer has smaller particle size/ porosity for trapping smaller particles. US4753728 (Amway, 1988) describes one such carbon particle filter comprising an inner shell of bonded 0.037 to 0.178 mm size (80 to 400 US Series Mesh) screen carbon particles bonded to each other and an outer shell of bonded 0.178 to 0.853 mm size (20 to 80 US series mesh) screen carbon particles bonded to each other and to said inner shell whereby a unitized, integral double shell carbon filter is obtained. The above gradient filter is of the cylindrical type. This is prepared by having a mould of cylindrical shape which is separated into two annular cylinders using a separator sleeve. Carbon particles and polymeric binders of desired particle sizes are poured into the respective cylinders. The separator sleeve is then removed just before the heating stage, in which the block is sintered into a single moulded carbon block.

The US4753728 patent publication is restricted to a double shell filter where an outer annular cylinder integrally overlaps an inner annular cylinder. The present inventors have determined that such a configuration/shape does not give all the desired characteristics for filtration of water under near-gravity heads. They also found that the use of very fine particles 0.037 to 0.178 mm size screen (80 to 400 mesh) further compounds this problem, and the filter disclosed in US'728 chokes in very short time.

The present inventors then worked extensively over several years to understand the science behind the filtration. During the course of this study, they realized that there are several factors that need to be met, if an improved filter has to be prepared. Firstly, extensive experiments were carried out to determine that a more selective combination of particle size of the particles in the first layer and in the second layer are required to obtain better filtration efficiency while enlarging filter life. Further, the present inventors found that the external surface area of the first layer of the filter has to be larger than the external surface area of the second layer for getting optimum utilization of the filter media. Another very important criterion was understood by the present inventors during the course of improving the filter performance in that the length of the shortest path over which the water would flow from any point on the inlet of the filter to the outlet has to be maintained substantially equal. It is only when all of the above criteria are met that any improvement in the performance of the filter in terms of filtration efficiency and filter life could be met. This involved several hundreds of possible combinations of filter shapes, configurations, particle sizes of the carbon in the first layer and the second layer and their relative amounts, each of which had to be optimized before arriving at the present invention. In the first few years through the course of the above invention, the inventors had improved the art in some respect and applied for a patent application which was published as WO2005094966. This claims a carbon block filter media for use in gravity fed filters comprising (a) powder activated carbon (PAC) having a particle size such that 95 wt% of the particles pass through 0.297 mm size screen (50 mesh) and not more than 12% passes through 0.075 mm size screen (200 mesh) and (b) a binder material a Melt Flow Resistance (MFR) of less than 5. In this disclosure, the filter media preferably has 55 to 80 wt % of the PAC particles in the particle size range of 0.075 to 0.152 mm size screen (100 to 200 mesh) in the lower 50 volume% of the carbon block filter. This was achieved by taking carbon particles in the entire size range and vibrating the mould during the manufacturing process to cause some segregation of the finer particles to the lower bottom half of the filter media. The inventors in WO2005094966 believed that the segregation of the particles caused by the vibration would bring about some gradient in the particle size. But over the course of the last few years, they realized that although they had chanced about one of the optimum shapes of the filter (hemispherical) and an approximate total particle size range, they were not able to get the desired efficiency in terms of particle removal and filter life. The process taught in US4753728, of using a separator sleeve to separate the distinct particle size ranges, with the separator sleeve removed just prior to heating, could not be applied to hemispherically or torispherically shaped filters. In any three-dimensional object there are three mutually orthogonal sectional planes. In the cylindrical gradient filter there is at least one such sectional plane which is defined by straight (non-curved) lines. In a hemispherical or torispherical filter all the sectional planes are defined by curved lines and not by straight lines. Hence the process taught by US4753728, which comprises removal of the separator sleeve without disturbing the shape of the loaded particles, cannot be applied to develop a hemispherical or torispherical gradient filter. The present inventors believe that it is for this reason that in the several years since the publication of US4753728, that no hemispherical or torishpherical gradient filter has been developed. It is only, for the first time in present invention, that a gradient filter has been developed to solve the drawbacks of the present state of the art and provide an improvement.

It is thus an object of the present invention to ameliorate or overcome at least one of the disadvantages of known filter blocks described above.

It is another object of the present invention to provide for a filter block which ensures 3 log removal of cysts consistently over long periods of time.

It is yet another object of the present invention to provide for a process to prepare a layered filter block which is simple, inexpensive and convenient and yet provides robust filter performance.

### SUMMARY OF THE INVENTION

According to a first aspect of the present invention there is provided a process for preparing a hemispherical or torispherical particulate filter block comprising the steps of:
(a) mixing particles of (30 to 60 mesh) 0.251 to 0.599 mm size screen with a binder in the presence of water to prepare a moist first layer mixture;
(b) separately mixing particles of (60 to 200 mesh) 0.075 to 0.251 mm size screen with a binder to prepare a second layer mixture;
(c) adding the moist first layer mixture to a mould of desired size and desired hemispherical or torispherical shape;
(d) stamping the exposed surface of the first layer mixture in the mould with a non-planar stamp to create a curved exposed surface;
(e) adding the second layer mixture to the mould over said curved exposed surface
(f) heating said mould to a temperature in the range from 150 °C to 350 °C;
   and
(g) cooling and demoulding said filter block,
wherein the resulting first layer comprises less than 20 weight% particles of size smaller than 0.251 mm size screen (60 mesh) and the second layer comprises less than 20 weight% particles of size greater than 0.251 mm size screen (60 mesh).

It is particularly preferred that the weight ratio of water to the particles to prepare the moist first layer mixture is less than 4.

According to a second aspect of the present invention there is provided a hemispherical or torispherical particulate filter block comprising:
(a) a first layer of particles of 0.251 to 0.599 mm size screen (30 to 60 mesh size) bonded together with a binder, said first layer integrally bonded to
(b) a second layer of particles of 0.075 to 0.251 mm size screen (60 to 200 mesh size) bonded together with a binder;
said block being obtainable by the process according to the first aspect of the present invention, whereby the external surface of the first layer is larger than the external surface of the second layer.

It is preferred that the particles are activated carbon particles.

It is preferred that the binder is a polymeric binder.

It is particularly preferred that the polymeric binder has a Melt Flow Rate of less than 5 g/ 10 minutes.

### DETAILED DESCIPTION OF THE INVENTION

The invention provides for a filter block having enhanced filtration characteristics as compared to similar filters of the past when used for filtration of water under gravity head.

This filter is able to achieve these enhanced filtration characteristics due to a combination of many factors. Firstly the filter block is in the hemispherical or torispherical shape. These shapes provide the desired uniform path length and desired ratio of the inlet surface area of the first layer and the surface area of the second layer which in combination with the selective particle size of the particles of the first and the second layer provide the enhanced filtration while ensuring long life of the filter.

By the first layer is meant the layer through which water first flows before it flows through the second layer.

The first layer preferably comprises more than 80% particles of 0.251 to 0.599 mm (30 to 60 mesh size). The second layer preferably comprises more than 80% activated carbon particles of 0.075 to 0.251 mm size screen (60 to 200 mesh size).

The particles are preferably made of activated carbon, diatomaceous earth, sand, clay or ceramic. More suitable particles are sand or activated carbon, most preferred being activated carbon.

Activated carbon particles are preferably selected from one or more of bituminous coal, coconut shell, wood and petroleum tar. Surface area of the activated carbon particles preferably exceeds 500 m²/g, more preferably exceeds 1000 m²/g. Preferably, the activated carbon has a size uniformity coefficient of less than 2, more preferably less than 1.5, Carbon Tetrachloride number exceeding 50%, more preferably exceeding 60%. The activated carbon preferably has an Iodine number greater than 800, more preferably greater than 1000.

The particles in the first layer and in the second layer could be of the same material or of different material, e.g. the first layer could be sand while the second layer could be activated carbon. Alternately both the first layer and the second layer could be activated carbon.

The particles in the first layer of the filter block and in the second layer of the filter block are bonded to each other using a binder. Suitable binders are polymers, inorganic binders like white cement and resins. Polymeric binders are most preferred. Polymeric binders having a Melt Flow Rate (MFR) of less than 5 g/10 minutes are further more preferred. As per the present invention, the first layer and the second layer are also integrally bonded to each other using a binder material preferably a polymer having an MFR of less than 5 g/ 10 minutes. The binder material preferably has an MFR of less than 2 g/ 10 minutes, more preferably less than 1 g/ 10 minutes. Optimally the MFR is near zero.

The melt-flow rate (MFR) is measured using ASTM D 1238 (ISO 1133) test. The test measures the flow of a molten polymer through an extrusion plastometer under specific temperature and load conditions. The extrusion plastometer consists of a vertical cylinder with a small die of 2 mm at the bottom and a removable piston at the top. A charge of material is placed in the cylinder and preheated for several minutes. The piston is placed on top of the molten polymer and its weight forces the polymer through the die and on to a collecting plate. The time interval for the test ranges from 15 seconds to 15 minutes in order to accommodate the different viscosities of plastics. Temperatures used are 190, 220, 250 and 300 °C (428, 482 and 572°F). Loads used are 1.2, 5, 10 and 15 kg. As per the present invention the tests are done at 190 °C at 15 kg load.

The amount of polymer collected after a specific interval is weighed and normalized to the number of grams that would have been extruded in 10 minutes: melt flow rate is expressed in grams per reference time.

The binder is preferably a thermoplastic polymer having the low MFR values above described. Suitable examples include ultra high molecular weight polymer preferably polyethylene, polypropylene and combinations thereof, which have these low MFR values. The molecular weight is preferably in the range of 10⁶ to 10⁹ g/mole. Binders of this class are commercially available under the trade names HOSTALEN from Tycona GMBH, GUR, Sunfine (from Asahi, Japan), Hizex (from Mitsubishi) and from Brasken Corp (Brazil). Other suitable binders include LDPE sold as Lupolen (from Basel Polyolefins) and LLDPE from Qunos (Australia).

Bulk density of the binder used as per the invention is preferably less than or equal to 0.6 g/cm³, more preferably less than or equal to 0.5 g/cm³, and further more preferably less than or equal to 0.25 g/cm³. The binder content can be measured by any known method and is preferably measured by Thermogravimetric analysis.

The ratio of the thickness of the first layer to the thickness of the second layer is preferably in the range of 10 : 1 to 1: 10, more preferably in the range of 5:1 to 1:5. The weight ratio of the second layer to the first layer is preferably in the range of 1:3 to 1:10, more preferably in the range of 1:4 to 1:8.

In both the first and the second layer, it is preferred that the weight ratio of the binder to the particles is approximately the same. The weight ratio of binder material to particles is preferably in the range of 1:1 to 1:20, more preferably in the range of 1:2 to 1:10.

Although the shapes for which the filter block of the invention gives the desired improved performance are hemispherical or torispherical, it is preferred that the shape is hemispherical.

The above disclosed moulded filter of the invention is adapted to provide for removal of chemical contaminants and more importantly provide for effective removal of at least 3-log i.e. 99.9% of cysts such as *Giardia lamblia, Cryptospordirium parvum and Entamoeba histolica*. That is to say, if the input water contains 1000 cysts, the output water will contain at the most only 1 cyst.

According to a preferred aspect of the present invention there is provided a water filter for use in gravity fed applications comprising (a) a filter block of the second aspect of the invention and (b) a base plate with an orifice for water exit, to which the filter block filter is adhered. The water filter so constructed may optionally comprise a washable or replacable sediment filter for removing fine dust and other particulates generally above 3 microns upstream of the carbon block filter. Further the water filter may comprise a detachable cover to hold the water filter as one integral unit.

According to the present invention, there is provided a process for preparing a hemispherical or torispherical particulate filter block comprising the steps of: (a) mixing particles of 0.251 to 0.599 mm size screen (30 to 60 mesh size) with a binder in the presence of water to prepare a moist first layer mixture; (b) separately mixing particles of 0.075 to 0.251 mm size screen (60 to 200 mesh size) with a binder to prepare a second layer mixture: (c) adding the moist first layer mixture to a mould of desired size and mixture: (c) adding the moist first layer mixture to a mould of desired size and desired hemispherical or torispherical shape; (d) stamping the exposed surface of the first layer mixture in the mould with a non-planar stamp to create a curved exposed surface; (e) adding the second layer mixture to the mould over said curved exposed surface; (f) heating said mould to a temperature in the range from 150 °C to 350 °C; and (g) cooling and demoulding said filter block.

In carrying out the above disclosed process, the first layer comprises less than 20 weight % particles of size smaller than 0.251 mm size screen (60 mesh) and the second layer comprises less than 20 weight % particles of size greater than 0.251 mm size screen (60 mesh).

The above described process can be used to prepare the filter block of the second aspect of the present invention. Thus, in the above described process, suitable particles are activated carbon, diatomaceous earth, sand, clay or ceramic. More suitable particles are sand or activated carbon, most preferred being activated carbon. Suitable binders for use in the first layer and in the second layer in the above described process are polymers, inorganic binders like white cement and resins. Polymeric binders are most preferred. Polymeric binders having a Melt Flow Rate (MFR) of less than 5 g/10 minutes are preferred, further more preferred MFR values being less than 2 g/10 minutes, even further more values being less than 1 g/10 minutes. Thus, preferred binders useful in the above process are ultra high molecular weight polymer preferably polyethylene, polypropylene and combinations thereof, which have these low MFR values. The molecular weight is preferably in the range of 10⁶ to 10⁹ g/mole.

Mixing of the particles, the binder, and water when present, is preferably done in vessels which include an agitator, mixer with dulled impeller blades, ribbon blender, rotary mixer, sigma mixer or any other low shear mixer that does not significantly alter the particle size distribution. The mixing is carried out to prepare a uniform mix of the filter medium. The mixing time is preferably from 0.5 to 30 minutes. Preferably, amount of said water used in preparing the moist first layer is not more than 4 times the amount of particles, more preferably not more than 3 times the amount of particles. Optimally the amount of water used is from 0.5 to 1.5 times the weight of the particles. The binder is then added to the above mixture and is further mixed. The most preferred mixer is sigma mixer.

Optionally, the second layer may also be mixed with some amount of water before adding to the mould. When added, the amount of water used in preparing a moist second layer is not more than 4 times, preferably not more than 3 times the amount of particles. Optimally the amount of water used is from 0.5 to 1.5 times the weight of the particles. In such a case, the moist second layer may also be stamped with a second non-planar stamp to create a curved surface on the second layer prior to heating said mould. A preferred aspect of the process comprises the second stamp to be present along with the filter block when the mould is heated and the second stamp is demoulded only after the filter block has been formed with the heating step. Preferably, the shape of the curved exposed surface corresponds to the shape of the curved surface of the mould. Thus, when a hemispherical shape is the preferred shape of the filter block, both the mould and the non planar stamp and preferably the second non-planar stamp have a hemispherical shape.

Preferably, the weight ratio of the binder to the activated carbon particles in both the first layer and the second layer is in the range of 1:1 to 1:20. The preferred ratio of the surface area of the inlet surface of the first layer to the surface area of the inlet surface of the second layer is in the range of 1:1 to 100 : 1.

The material in the mould before it is heated is preferably compacted. Compaction pressure may be from 0 to 15 kg/cm². Suitable compaction pressures are not more than 12 kg/cm², preferably from 3 to 10 kg/cm² and most preferably from 4 to 8 kg/cm². The pressure is preferably applied using either a hydraulic press or a pneumatic press, more preferably a hydraulic press.

The mould is made of aluminum, cast iron, steel or any material capable of withstanding temperatures exceeding 400 °C.
A mould release agent is preferably coated on the inside surface of the mould. The mould release agent is preferably selected from silicone oil, aluminum foil, or the mould can be coated with suitable materials like Teflon or any other commercially available mould release agent that has little or no adsorption onto the filter medium.

The mould is then heated to a temperature of 150°C to 350 °C, preferably in the range of 200 °C to 300 °C. The mould is kept heated for more than 60 minutes, preferably 90 to 300 minutes. The mould is preferably heated in an oven using a non-convection, forced air or forced inert-gas convection oven.

The mould is then cooled and the moulded filter released from the mould.

The inventors found that as they developed the process of the present invention there were surprising advantages. On the one hand, the water added to prepare the moist first layer gives the uniform mixing of the particles and binder to provide uniform porosity in the filter block, on the other hand, the wetness of the moist first layer aids in the shape retention after the stamping step which is necessary before addition of the second layer mixture.

By way of the filter block of the invention, it is possible to attain average flow rate of filtered water in the range of 10 to 500 ml/min, at an average head of 10 cm under gravity, without compromising on the requirements of removal of particulates that includes microorganisms and chemical contaminants. However, an average flow rate in the range of 50 to 200 ml/min is also acceptable.

Further details of the invention, its objects and advantages are explained hereunder in greater details with reference to the following non-limiting examples. It would be apparent to a person skilled in the art that many such examples are possible and the examples given under are for illustrative purpose only. These should not be construed so as to limit the scope of this invention in any manner.

### BRIEF DESCRIPTION OF FIGURES

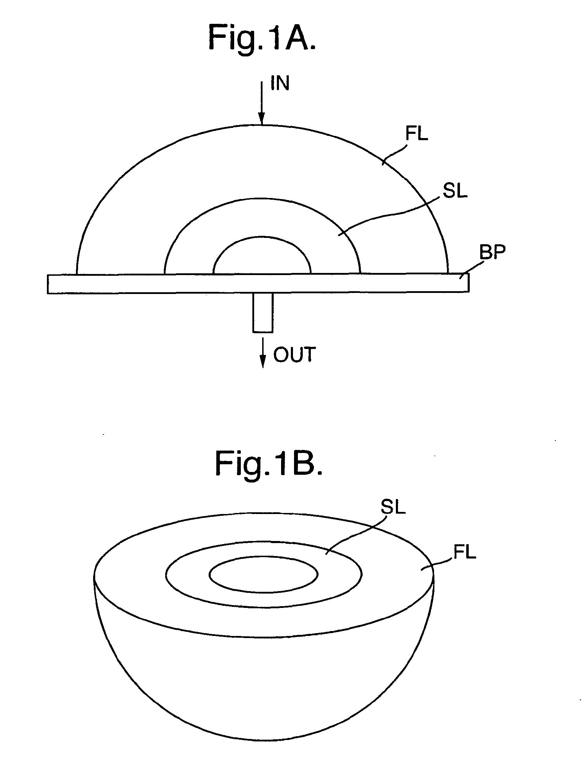

Figure 1 is a schematic view of a carbon block as per the invention with Figure 1A being a front view and Figure 1B being a perspective bottom view of the filter.

### DETAILED DESCRIPTION OF THE FIGURES

Figure 1A is a front view of a carbon block as per the invention. The carbon block comprises a first layer (FL) and a second layer (SL) which are integrally bonded to each other. The carbon block may also be bonded to a base plate (BP) which has a nozzle (N) for directing the flow of filtered water from the carbon block.
When in use, water enters the carbon block filter in a direction (IN) as shown in figure 1A, flows first through the first layer (FL) and then through the second layer (SL) and exits the filter through the nozzle (N) provided on the base plate in the direction (OUT) as shown in Figure 1A.

### Examples

### Example-1:

136 grams of activated carbon particles of 0.251 to 0.599 mm size screen (30 to 60 mesh size) and 28 grams of an ultrahigh molecular weight polyethylene binder (GUR 2122) having a Melt Flow Rate of almost zero g/ 10 minutes were mixed with 136 grams of water to prepare a moist first layer mixture. Percentage of carbon particles of size smaller than 0.251 mm size screen (60 mesh) in the first layer mixture was 11.5%. 25 grams of activated carbon particles of 0.075 to 0.251 mm size screen (60 to 200 mesh size) were mixed with water and the same polymeric binder in the same ratios as used in the moist first layer to prepare a second layer mixture separate from the moist first layer mixture. Percentage of carbon particles of size greater than 0.251 mm size screen (60 mesh) in the second layer mixture was 14%. The moist first layer mixture was added to a mould of desired size and desired hemispherical shape. This moist mixture was stamped to create a curved exposed surface. The second layer mixture was then added to the mould, over the curved exposed surface. The mould was heated to a temperature in the range from 150 °C to 350 °C and cooled following which the formed filter was demoulded. A drawing of the filter thus prepared is shown in Figure -1A and 1 B.

### Example -2:

Activated carbon as used for the outer layer and the inner layer along with same quantity of binder as used in Example - 1 were mixed together to prepare a single mixture. This was used to prepare a carbon filter using the process as described in the publication WO2005094966. The process included a step of placing the materials in a hemispherical mould which was closed and vibrated in the manner as disclosed in WO2005094966. The mould was heated in a manner identical to that used for producing filter of Example -1 following which the mould was cooled and the filter was demoulded.

The filters made as per Example 1 and Example 2 were used to filter a test water prepared as per composition given in Table -1, under gravity head conditions.

**Table - 1**

| Material | Concentration, ppm |
|---|---|
| Calcium chloride | 392 |
| Magnesium chloride | 173 |
| Sodium sulphate | 80 |
| Magnesium sulphate | 119 |
| Ferrous sulphate | 3 |
| Aluminium sulphate | 6 |
| Sodium bicarbonate | 826 |
| Humic acid | 2.5 |
| Dust | 15 |

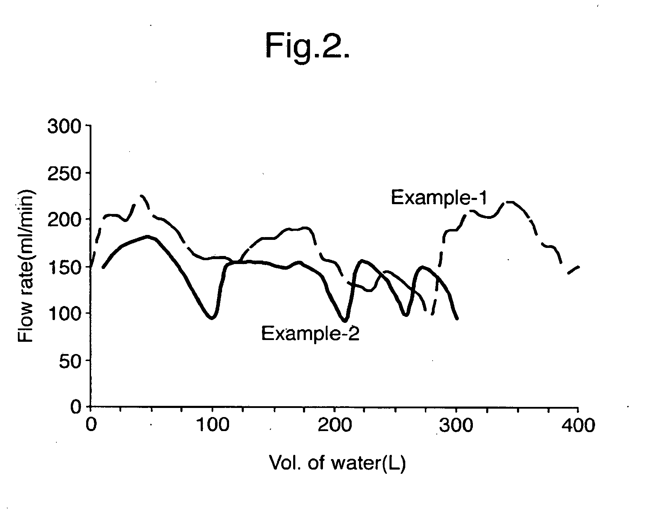

Both the carbon blocks ensured filtration of the test water to produce output water having a TSS of less than 0.1 NTU starting with a feed water of 6 - 9 NTU. The data on the flow rate of the filtered water is shown as a plot in Figure -2. The graph of figure 2 depicts lowering of flow rate up to a particular point (∼ 100 ml/minute) after which it slopes upward again. This inflection is due to manual intervention where the filter is removed and washed to rejuvenate the filter and fitted back into the system to continue the filtration operation. As can be seen from figure 2, carbon block of Example - 2 required 4 interventions in the first 300 L, while carbon block of Example - 1, which was prepared as per the invention, required only one intervention. This clearly demonstrates the advantage of using a carbon block as per the present invention as compared to a prior art sample.

## Claims

1. A process for preparing a hemispherical or torispherical particulate filter block comprising the steps of:
(a) mixing particles of 0.251 to 0.599 mm size screen (30 to 60 mesh size) with a binder in the presence of water to prepare a moist first layer mixture:
(b) separately mixing particles of 0.075 to 0.251 mm size screen (60 to 200 mesh size) with a binder to prepare a second layer mixture
(c) adding the moist first layer mixture to a mould of desired size and desired hemispherical or torispherical shape:
(d) stamping the exposed surface of the first layer mixture in the mould with a non-planer stamp to create a curved exposed surface:
(e) adding the second layer mixture to the mould over said curved exposed surface
(f) heating said mould to a temperature in the range from 150 °C to 350 °C; and
(g) cooling and demoulding said filter block.
wherein the resulting first layer comprises less than 20 weight% particles of size smaller than 0.251 mm size screen (60 mesh) and the second layer comprises less than 20 weight% particles of size greater than 0.251 mm size screen (60 mesh).

2. A process as claimed in claim 1 wherein the weight ratio of water to said particles is less than 4.

3. A process as claimed in claim 2 wherein the shape of the curved exposed surface corresponds to the shape of the curved surface of the mould.

4. A hemispherical or torispherical particulate filter block comprising:
(a) a first layer of particles of 0.251 to 0.599 mm size screen (30 to 60 mesh size) bonded together with a binder, said first layer integrally bonded to
(b) a second layer of particles of 0.075 to 0.251 mm size screen (60 to 200 mesh size) bonded together
with a binder;
block being obtainable by the process according to anyone of claims 1 to 3, whereby the external surface of the first layer is larger than the external surface of the second layer.

5. A filter block as claimed in claim 4 wherein the particles are activated carbon particles.

6. A filter block as claimed in claim 4 or 5 wherein the binder is a polymeric binder.

7. A filter block as claimed in claim 6 wherein the polymeric binder has a Melt Flow Rate of less than 5g/10 minutes

8. A filter block as claimed in any one of claims 4-7
wherein the ratio of the thickness of the first layer to the thickness of the second layer is in the range of 10:1 to 1:10.

9. A filter block as claimed in any one of claims 4-8
wherein the weight ratio of the second layer to the first layer is in the range of 1:3 to 1:10

10. A filter block as claimed in any of claims 4-9 wherein the weight ratio of binder material to particles is in the range of 1:1 to 1:20.

11. A water filter for use in gravity fed applications comprising a filter block as claimed in any one of claims 4-10;

## Patentansprüche

1. Verfahren zum Herstellen eines hemisphärischen oder torisphärischen Partikelfilterblocks, das die folgenden Schritte umfasst:
(a) Mischen von Partikeln mit einer Siebweite von 0,251 bis 0,599 mm (30 bis 60 Maschen pro Zoll) mit einem Bindemittel in Gegenwart von Wasser, um eine feuchte Erstschichtmischung herzustellen;
(b) separates Mischen von Partikeln mit einer Siebweite von 0,075 bis 0,251 mm (60 bis 200 Maschen pro Zoll) mit einem Bindemittel, um eine Zweitschichtmischung herzustellen;
(c) Hinzufügen der feuchten Erstschichtmischung zu einer Gussform einer gewünschten Größe und einer gewünschten hemisphärischen oder torisphärischen Form;
(d) Prägen der freiliegenden Oberfläche der Erstschichtmischung in der Gussform mit einem nicht ebenen Stempel, um eine gekrümmte freiliegende Oberfläche zu erzeugen;
(e) Hinzufügen der Zweitschichtmischung zu der Gussform über der gekrümmten freiliegenden Oberfläche;
(f) Erhitzen der Gussform auf eine Temperatur im Bereich von 150 °C bis 350 °C; und
(g) Abkühlen und Entformen des Filterblocks,
wobei die resultierende erste Schicht weniger als 20 Gewichtsprozent Partikel mit einer Größe, die kleiner als eine Siebweite von 0,251 mm (60 Maschen pro Zoll) ist, umfasst und die zweite Schicht weniger als 20 Gewichtsprozent Partikel mit einer Größe, die größer als eine Siebweite von 0,251 mm (60 Maschen pro Zoll) ist, umfasst.

2. Verfahren nach Anspruch 1, wobei das Gewichtsverhältnis von Wasser zu den Partikeln weniger als 4 beträgt.

3. Verfahren nach Anspruch 2, wobei die Form der gekrümmten freiliegenden Oberfläche der Form der gekrümmten Oberfläche der Gussform entspricht.

4. Hemisphärischer oder torisphärischer Partikelfilterblock, der umfasst:
(a) eine erste Schicht von Partikeln mit einer Siebweite von 0,251 bis 0,599 mm (30 bis 60 Maschen pro Zoll), die mit einem Bindemittel gebunden sind, wobei die erste Schicht integral verbunden ist mit
(b) einer zweiten Schicht von Partikeln mit einer Siebweite von 0,075 bis 0,251 mm (60 bis 200 Maschen pro Zoll), die mit einem Bindemittel gebunden sind;
wobei der Block durch ein Verfahren nach einem der Ansprüche 1 bis 3 erhalten werden kann, wobei die Außenfläche der ersten Schicht größer als die Außenfläche der zweiten Schicht ist.

5. Filterblock nach Anspruch 4, wobei die Partikel Aktivkohlepartikel sind.

6. Filterblock nach Anspruch 4 oder 5, wobei das Bindemittel ein Polymer-Bindemittel ist.

7. Filterblock nach Anspruch 6, wobei das Polymer-Bindemittel eine Schmelzfließrate von weniger als 5 g/10 Minuten besitzt.

8. Filterblock nach einem der Ansprüche 4-7,
wobei das Verhältnis der Dicke der ersten Schicht zu der Dicke der zweiten Schicht in dem Bereich von 10:1 bis 1:10 liegt.

9. Filterblock nach einem der Ansprüche 4-8, wobei das Gewichtsverhältnis der zweiten Schicht zu der ersten Schicht in dem Bereich von 1:3 bis 1:10 liegt.

10. Filterblock nach einem der Ansprüche 4-9, wobei das Gewichtsverhältnis von Bindemittel zu Partikeln in dem Bereich von 1:1 bis 1:20 liegt.

11. Wasserfilter zur Verwendung bei schwerkraftgespeisten Anwendungen, der umfasst:
einen Filterblock nach einem der Ansprüche 4-10.

## Revendications

1. Procédé pour préparer un bloc de filtre à particules hémisphérique ou torisphérique comprenant les étapes consistant à :
(a) mélanger des particules de 0,251 à 0,599 mm de taille de tamis (30 à 60 mailles) avec un liant en présence d'eau afin de préparer un mélange de première couche humide ;
(b) mélanger séparément des particules de 0,075 à 0,251 mm de taille de tamis (60 à 200 mailles) avec un liant afin de préparer un mélange de seconde couche ;
(c) ajouter le mélange de première couche humide dans un moule de taille souhaitée et de forme hémisphérique ou torisphérique souhaitée ;
(d) estamper la surface exposée du mélange de première couche dans le moule avec une matrice non plane afin de créer une surface exposée incurvée ;
(e) ajouter le mélange de seconde couche dans le moule sur ladite surface exposée incurvée ;
(f) faire chauffer ledit moule à une température de l'ordre de 150 °C à 350 °C ; et
(g) faire refroidir et démouler ledit bloc de filtre,
dans lequel la première couche résultante comprend moins de 20 % en poids de particules de taille inférieure à 0,251 mm en taille de tamis (60 mailles) et la seconde couche comprend moins de 20 % en poids de particules de taille supérieure à 0,251 mm en taille de tamis (60 mailles).

2. Procédé selon la revendication 1, dans lequel le rapport pondéral d'eau sur lesdites particules est inférieur à 4.

3. Procédé selon la revendication 2, dans lequel la forme de la surface exposée incurvée correspond à la forme de la surface incurvée du moule.

4. Bloc de filtre à particules hémisphérique ou torisphérique comprenant :
(a) une première couche de particules de 0,251 à 0,599 mm en taille de tamis (30 à 60 mailles) reliées ensemble avec un liant, ladite première couche étant reliée de manière solidaire à :
(b) une seconde couche de particules de 0,075 à 0,251 mm en taille de tamis (60 à 200 mailles) reliées ensemble avec un liant ;
ledit bloc pouvant être obtenu par le procédé selon l'une quelconque des revendications 1 à 3, moyennant quoi la surface externe de la première couche est supérieure à la surface externe de la seconde couche.

5. Bloc de filtre selon la revendication 4, dans lequel les particules sont des particules de charbon actif.

6. Bloc de filtre selon la revendication 4 ou 5, dans lequel le liant est un liant polymère.

7. Bloc de filtre selon la revendication 6, dans lequel le liant polymère a un débit en fusion inférieur à 5 g/10 minutes.

8. Bloc de filtre selon l'une quelconque des revendications 4 à 7, dans lequel le rapport de l'épaisseur de la première couche sur l'épaisseur de la seconde couche est de l'ordre de 10:1 à 1:10.

9. Bloc de filtre selon l'une quelconque des revendications 4 à 8, dans lequel le rapport pondéral de la seconde couche sur la première couche est de l'ordre 1:3 à 1:10.

10. Bloc de filtre selon l'une quelconque des revendications 4 à 9, dans lequel le rapport pondéral du matériau liant sur les particules est de l'ordre 1:1 à 1:20.

11. Filtre à eau destiné à être utilisé dans des applications d'alimentation par gravité comprenant :
un bloc de filtre selon l'une quelconque des revendications 4 à 10.
